(19) Europäisches Patentamt
European Patent Office
Office européen des brevets

(11) **EP 1 838 138 B1**

(12) **EUROPEAN PATENT SPECIFICATION**

(45) Date of publication and mention
of the grant of the patent:
**27.02.2013 Bulletin 2013/09**

(51) Int Cl.:
***H05B 6/04*** *(2006.01)*

(21) Application number: **07104086.9**

(22) Date of filing: **14.03.2007**

(54) **Booster circuit for enhanced induction heating unit, power-supply unit, and image forming apparatus using the same**

Verstärkerschaltkreis für ein verbessertes Induktionsheizgerät, Netzteileinheit und Bilderzeugungsvorrichtung damit

Circuit de démarrage pour unité de chauffage à induction améliorée, unité d'alimentation électrique, et appareil de formation d'images l'utilisant

(84) Designated Contracting States:
**DE ES FR GB IT NL**

(30) Priority: **20.03.2006 JP 2006076730**
**22.09.2006 JP 2006257588**

(43) Date of publication of application:
**26.09.2007 Bulletin 2007/39**

(73) Proprietor: **Ricoh Company, Ltd.**
**Tokyo 143-8555 (JP)**

(72) Inventor: **Yamashita, Tomofumi**
**Tokyo 143-8555 (JP)**

(74) Representative: **Schwabe - Sandmair - Marx**
**Patentanwälte**
**Stuntzstraße 16**
**81677 München (DE)**

(56) References cited:
**CH-A- 294 491        DE-A1- 2 938 348**
**US-A1- 2002 051 663    US-A1- 2002 158 063**

EP 1 838 138 B1

**Description**

This application claims priority from Japanese patent applications No. 2006-076730 filed on March 20, 2006 and No. 2006-257588 filed on September 22, 2006 in the Japan Patent Office.

TECHNICAL FIELD

The present disclosure generally relates to a booster circuit for boosting a voltage fed to an induction-heating unit for heating an object, and more particularly to a power-supply unit including a booster circuit, and an image forming apparatus including a power-supply unit having a booster circuit.

BACKGROUND

In general, an induction-heating unit (IH unit) may be driven by a commercial power supply such as alternate current (AC).
Such IH unit may have a protection function that may protect the IH unit from abnormal factors such as voltage-surge by thunder, momentary power-failure, sudden voltage-decrease, and sudden voltage-increase.
Hereinafter, the induction-heating unit may be termed as "IH unit" for the simplicity of expression, as required.
The IH unit may have a voltage-resonant circuit, which may generate a voltage having a value obtained by multiplying an input voltage by "Q factor". Such "Q factor" means "quality factor" (hereinafter referred as "Q factor," as required).
Such "Q factor" may be used as an indicator to indicate a performance level of voltage-resonant circuit.
Such "Q factor" can be computed as below with following equations of (1) and (2) with following settings: frequency of voltage-resonant circuit of "$\omega_0$"; coil inductance of "L"; capacitance of capacitor of "C"; and equivalent resistance value of "R" for a circuit.

$$(1) \quad Q = \omega_0 L / R$$

$$(2) \quad Q = (1/R) \times (1/\omega_0 C)$$

For example, in case of a series resonance circuit, a voltage of a coil or capacitor may become a voltage value, which may be obtained by multiplying a an input voltage, supplied by a power source, by "Q factor."
A circuit may have an electronic switch, which may be used for switching a relatively greater power (or electricity).
For example, such electronic switch may include an "insulated gate bipolar transistor (TGBT)." Hereinafter, the "insulated gate bipolar transistor" may be termed as "IGBT" for the simplicity of expression.

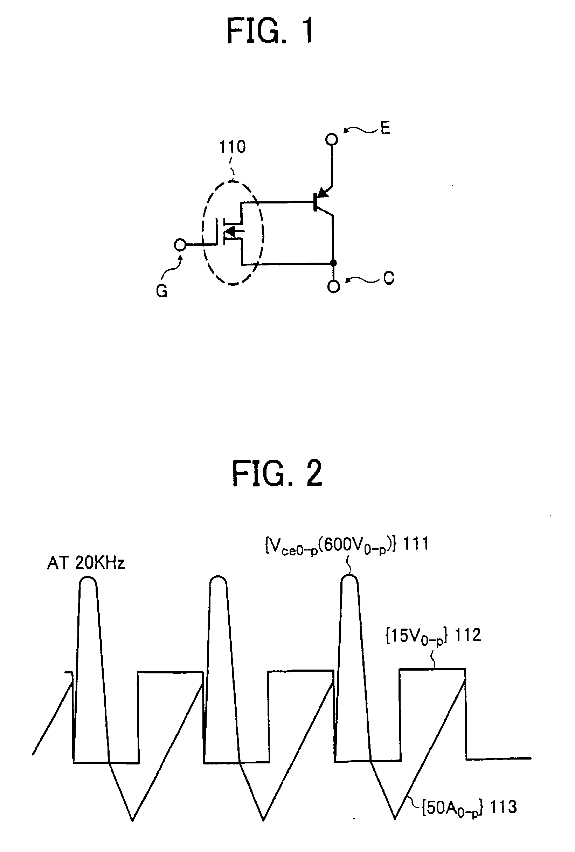

FIG. 1 shows an example circuitry of an IGBT, and FIG. 2 shows an example output waveform of an each terminal of IGBT when an electric power of 1,200 W(watt) is input to the IGBT for induction-heating.
The IGBT may be a bipolar transistor, which may built in a MOSFET (metal oxide semiconductor field effect transistor) 110 at a gate portion of the IGBT, and has a gate terminal G and an emitter terminal E as shown in FIG. 1.
Such IGBT can be driven by a applying a voltage between the gate terminal G and emitter terminal E, and may a function of arc-suppressing, in which an ON/OFF switching can be conducted by an input signal. Such IGBT may be a solid-state device, which can switch a greater power (or electricity).
As shown in FIG. 2, when an input voltage 111 is input to the IGBT, a gate voltage 112 at the gate terminal G and a collector voltage 113 at the collector terminal C may change.
Such IGBT can switch a relatively greater power (or electricity) compared to a FET (field-effect transistor), but a switching speed of the IGBT may be relatively slower than a switching speed of the FET.
An image forming apparatus may employ an induction-heating unit (IH unit) for fixing an image on a sheet, in which a switching operation may be conducted at a greater power (e.g., dielectric strength of 1,000V and electric current 60A).
Such switching at greater power cannot be conducted by a FET, which may be used for a normal level of power supply switching. Accordingly, an IGBT may be used for such switching at a greater power (or electricity).
Conventionally, an IH unit may reduce an induction heating time by increasing an induced electromotive force (or electricity).
Increasing a resonance voltage may increase such induced electromotive force.

A peak value of resonance voltage (referred to as "resonance peak value") may be increased by changing an inductance component or capacitor component of the IH unit. Such "resonance peak value" can be increased by reducing a resonance time, in general.

However, an IGBT used as electronic switch for induction-heating may have an upper limit for switching speed, and thereby a conventional circuit having the IGBT may not be preferable from a viewpoint of increasing switching speed.

Furthermore, if a switching speed may be increased forcedly in such conventional circuit, a switching loss of IGBT may become unfavorably greater.

Furthermore, if a resonance peak value (or Q factor) is increased, a peak value of waveform may become greater. In such a condition, Q factor may fluctuate even if a frequency change may occur in a smaller level, which may not be favorable for controlling the IGBT.

FIGs. 3A to 3C show output waveforms of each terminal of IGBT used for an induction-heating operation.

FIG. 3A shows a condition that a resonance period becomes longer and a resonance is not realized, in which a noise may be generated in a superimposed portion, and a greater loss occurs.

FIG. 3B shows a condition that a resonance is realized, in which an IGBT may be efficiently driven.

FIG. 3C shows a condition that a resonance may be realized, but a resonance period may be shorter and a peak value of waveform may become higher, in which a controlling of the IGBT may become difficult. Furthermore, a greater voltage may be applied to a coil, by which a greater heat may be generated, wherein such heat generation may result into a greater loss. Then, an electric current may flow to a body diode of IGBT, and a greater loss may be observed for a circuit.

As such, in a conventional IH unit, Q factor may be increased to increase an electromotive force so that a heating speed rate may be increased. In such condition, a peak value of resonance waveform may become higher, by which a controlling of the IGBT may become difficult.

FIG. 4 shows an example block diagram explaining a functional configuration of an induction-heating unit 90.

The induction-heating unit 90 may include an IH cooking heater, for example. Hereinafter, the induction-heating unit 90 may be termed as "IH unit 90" for simplicity of expressions.

The IH unit 90 may have a top plate (not shown) and a heating coil 94 placed under the top plate.

The heating coil 94 may heat a cooking pan 95, which is used as an object to be heated by the IH unit 90. The cooking pan 95 may be made of a metal such as iron, aluminum, stainless, or the like.

Such IH unit 90 may heat the cooking pan 95, which may contain material such as water with an induction-heating method. By heating the cooking pan 95 as such, water in the cooking pan 95 may be warmed or heated.

Furthermore, the IH unit 90 may include a commercial power supply 91, a rectifier 92, and an inverter 93, for example.

When a power supply to the IH unit 90 is set to ON condition, an alternate current (AC) may flow on the heating coil 94, which may be placed under the top plate.

Such alternate current (AC) may be a quasi-high frequency wave having a given frequency (e.g., 20 KHz). Such quasi-high frequency wave of alternate current (AC) may be generated from a direct current by the inverter 93 as below.

For example, the commercial power supply 91 may supply alternate current (AC) having a given frequency and voltage (e.g., 60 Hz or 50 Hz and AC 100V) to the rectifier 92. The rectifier 92 may rectify such alternate current (AC) to direct current (DC), and supplies the direct current (DC) to the inverter 93.

The inverter 93 may invert such direct current (DC) to alternate current (AC) having a higher frequency wave, and may flow such alternate current (AC) to the heating coil 94.

When such an alternate current (AC) may flow in the heating coil 94, a magnetic field may be generated around the heating coil 94.

Such magnetic field may induce an electric current called as "eddy current" on the cooking pan 95 placed over the heating coil 94.

If direct current (DC) may be flown in heating coil 94, such eddy current may be generated to the cooking pan 95 for a moment when a DC power supply is set to ON.

The eddy current may result into a heat energy measured as joule heat, which may be energy loss. Another energy loss such as hysteresis loss may occur but such energy loss may be practically ignored.

Such eddy current may have a flow direction, which may be opposite to a flow direction of electric current flowing in the heating coil 94.

The eddy current may generate heat energy in an object (e.g., bottom of cooking pan 95) to heat the cooking pan 95 with such heat energy. Accordingly, an object (e.g., bottom of cooking pan 95) may be directly heated by an induction heating method.

A heating value "W" for such induction heating can be computed as below.

$$W = I^2 \times R$$

wherein "I" represents eddy current, and "R" represents electrical resistivity of bottom of the cooking pan 95.

If the cooking pan 95 may have water therein, the cooking pan 95 heated by such heat energy may transfer the heat energy to water in the cooking pan 95, by which water in the cooking pan 95 may be warmed or heated to hot water.

Furthermore, such induction heating unit may be employed for an office automation (OA) apparatus recently.

A conventional image forming apparatus (e.g., copier) may employ a halogen heater for toner fixing process.

However, a recently marketed image forming apparatus may have employed the above-explained induction heating unit, by which a temperature control for toner fixing process may be more precisely conducted, and a warming-up time may be shortened, and thereby such induction heating unit may be effective for reducing energy consumption of an image forming apparatus.

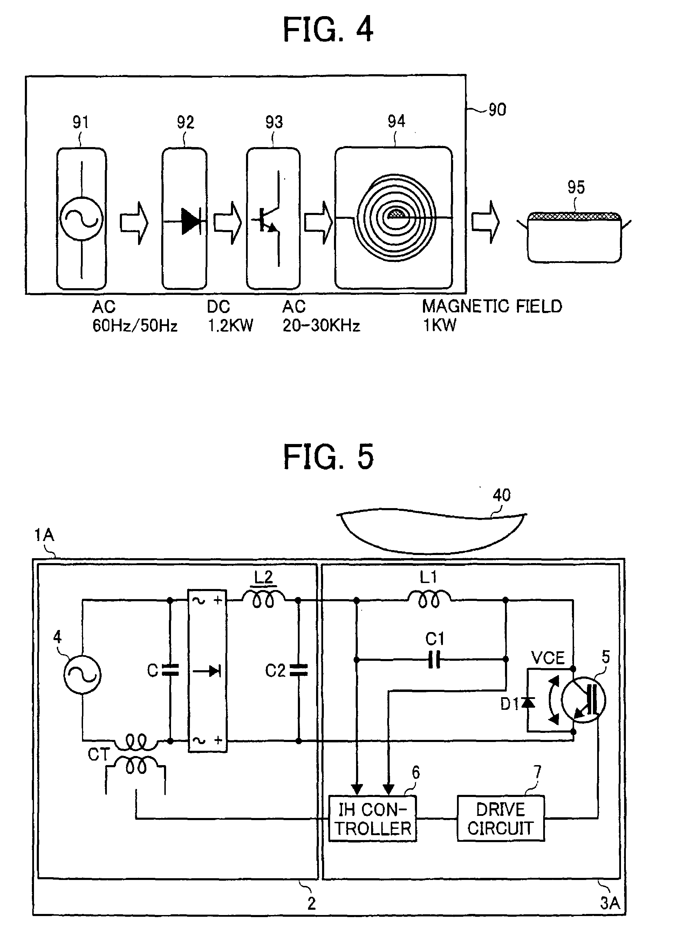

FIG. 5 shows a block diagram of an IH unit 1A having a conventional configuration.

The IH unit 1A may be operated as below when conducting an induction-heating operation.

(1) A commercial power supply 4 may supply an AC 100V (as commercial voltage) to a rectifying circuit 2, and the rectifying circuit 2 directly rectifies AC 100V to DC 141V.

(2) An inverter circuit 3A having an induction-heating (IH) controller 6 (as microcomputer) and a drive circuit 7 may convert the DC 141V to a quasi-high frequency wave having $600V_{0-p}$, $50A_{0-p}$, and 20 KHz to 40 KHz.

(3) The inverter circuit 3A may include an IGBT 5 as switching device (or element), which can conduct a switching operation for a greater power (or electricity).

(4) The IH controller 6 may control an ON/OFF operation of the IGBT 5 with the drive circuit 7.

(5) The above-mentioned operation at (4) may be a voltage resonance operation.

(6) The inverter circuit 3A may include a diode D1 as body diode for the IGBT 5.

(7) The IH controller 6 may control an induction heating operation, and also control a resonance point tracking, electric current protection, and voltage protection.

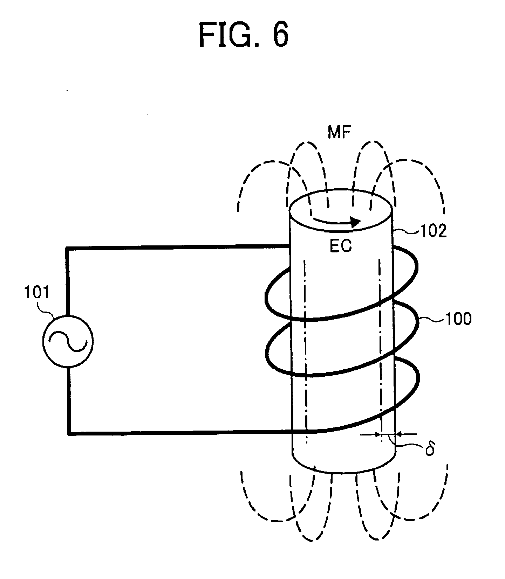

Hereinafter, a physical phenomenon of induction heating is explained with reference to FIG. 6, which shows fundamentals of induction heating.

(1) When a power supply 101 supplies alternate current (AC) to a coil 100, a electric current may flow in the coil 100, and such current may generate a magnetic field MF around the coil 100.

(2) Such magnetic field MF may also exist around a metal cylinder 102 used as electric conductor, which is an object placed inside the coil 100.

(3) Then, an electric current called as "eddy current EC" may flow in the metal cylinder 102 in a given direction to cancel an effect of the magnetic field MF. The eddy current EC may flow in a sub-surface portion, having a depth $\delta$, of the metal cylinder 102.

In general, an electric current density may become greater as closer to a surface of an electric conductor (e.g., metal cylinder 102) and may become smaller as far away from the surface of an electric conductor, wherein such phenomenon may be called as "skin effect."

The higher the frequency of electric current, the higher the electric current density at the surface, and a higher electric current density may increase an impedance of electric conductor.

(4) The eddy current EC and an electric resistivity of the metal cylinder 102 may generate a joule heat in the metal cylinder 102. Because the metal cylinder 102 may have more electric current in its surface portion, the surface of the metal cylinder 102 may be heated in a greater level.

(5) With such process, a temperature on the surface of metal cylinder 102 may be increased, and also heat dissipation from the metal cylinder 102 may occur concurrently.

(6) A heat transfer may occur from the surface to core portion of metal cylinder 102, by which the core portion of metal cylinder 102 may be heated after the surface of metal cylinder 102 is heated.

Document US 2002/0051663 A1 discloses a fixing apparatus in which a cylindrical roller having a thin metal layer is heated by an induction heating. The fixing apparatus comprises an exciting coil in parallel to a resonant capacitor and connected to a switching circuit.

SUMMARY

The present disclosure relates to a boosting circuit for use in an induction heating unit for heating an object including a switch element, a first coil, a second coil, and a capacitor. The switch element generates an alternate current voltage having a quasi-higher frequency from a direct current voltage. The first coil generates a magnetic field around the first coil with a flow of the alternate current voltage having the quasi-higher frequency in the first coil. The magnetic field is used to induce an eddy current in the object to heat the object inductively. The second coil is cumulatively connected to the first coil. The capacitor is connected to the first coil and the second coil in a parallel manner.

The present disclosure also relates to a power unit for use in an induction heating unit for heating an object including a power source, and a boosting circuit. The power source generates a direct current voltage. The boosting circuit receives the direct current voltage generated by the power source.

The present disclosure also relates to a power unit for use in an induction heating unit for heating an object including a rectifying circuit, and a boosting circuit. The rectifying circuit rectifies an alternate current voltage to a direct current voltage. The boosting circuit receives the direct current voltage rectified by the rectifying circuit.

The present disclosure also relates to an image forming apparatus including a fixing member, and a power unit. The fixing member fixes an un-fixed image, formed of image developer, on a recording medium. The power unit includes the cumulatively connected first and second coil and the capacitor connected to the first coil and the second coil in a parallel manner to heat the fixing member inductively.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 shows an example circuitry of an IGBT;
FIG. 2 shows an example output waveform of an each terminal of IGBT when an electric power is input to the IGBT for an induction heating operation;

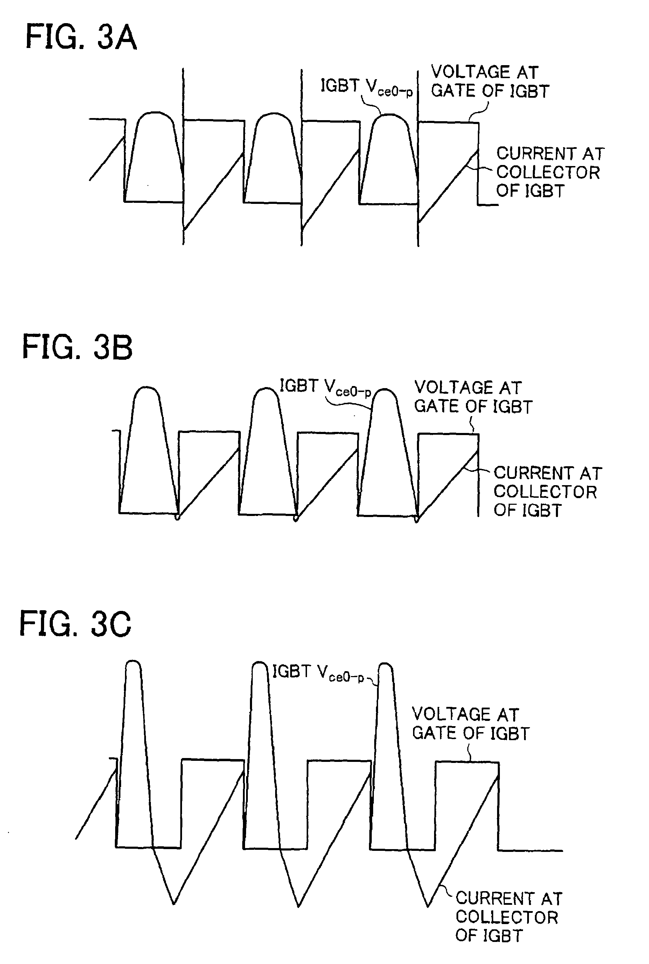

FIGs. 3A to 3C show output waveforms of each terminal of IGBT used for an induction-heating operation in given conditions;
FIG. 4 shows an example block diagram explaining a functional configuration of an induction heating unit;
FIG. 5 shows a block diagram of an induction heating unit having a conventional configuration;
FIG. 6 shows fundamentals of induction heating method;

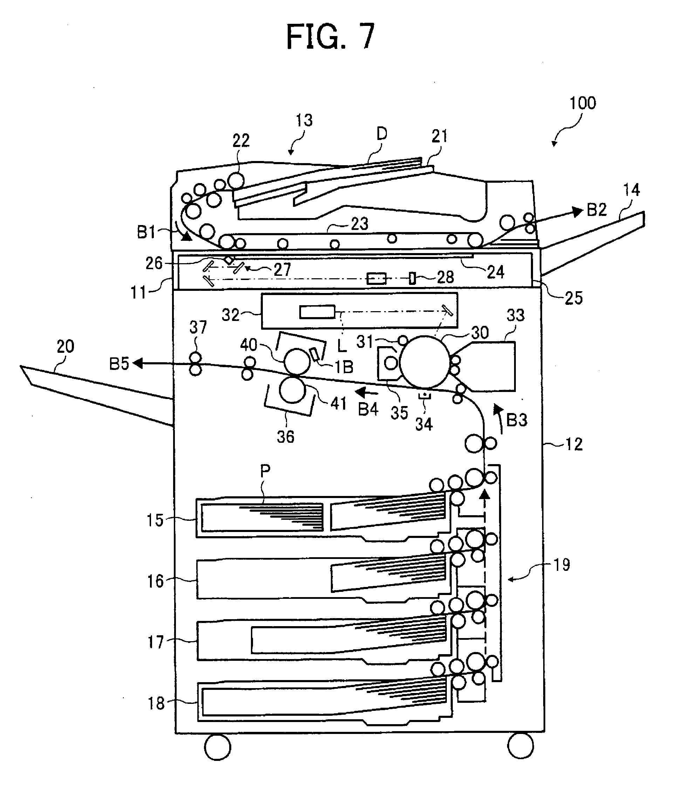

FIG. 7 shows a schematic cross-sectional view of an image forming apparatus 100 according to an example embodiment;

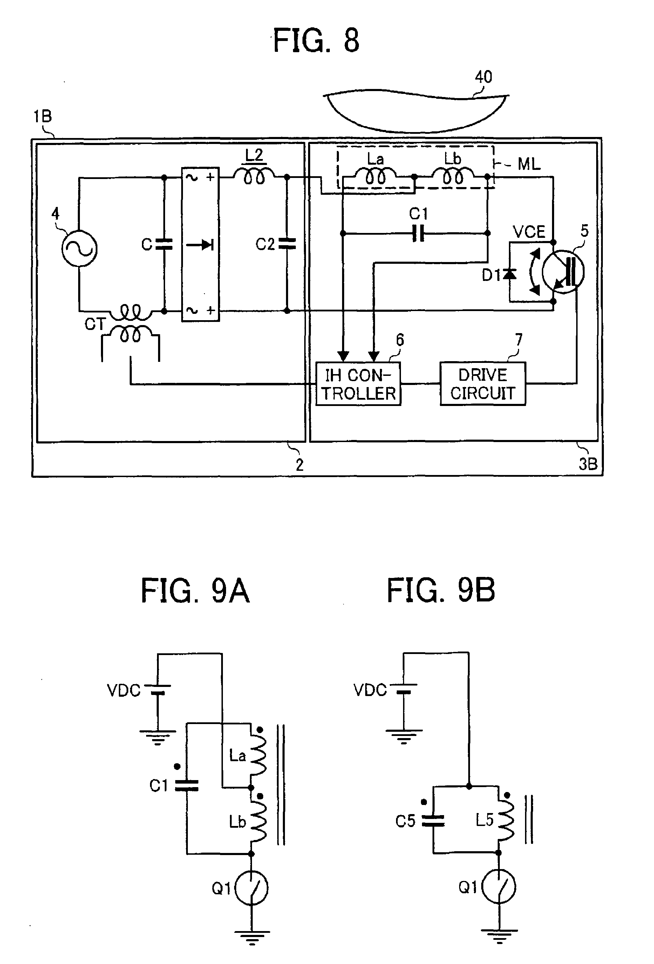

FIG. 8 shows an example circuit diagram of an induction heating unit according to an example embodiment;
FIG. 9A shows an example circuit diagram having a plurality of cumulatively connected coils;
FIG. 9B shows a conventional circuit diagram having a heating coil;

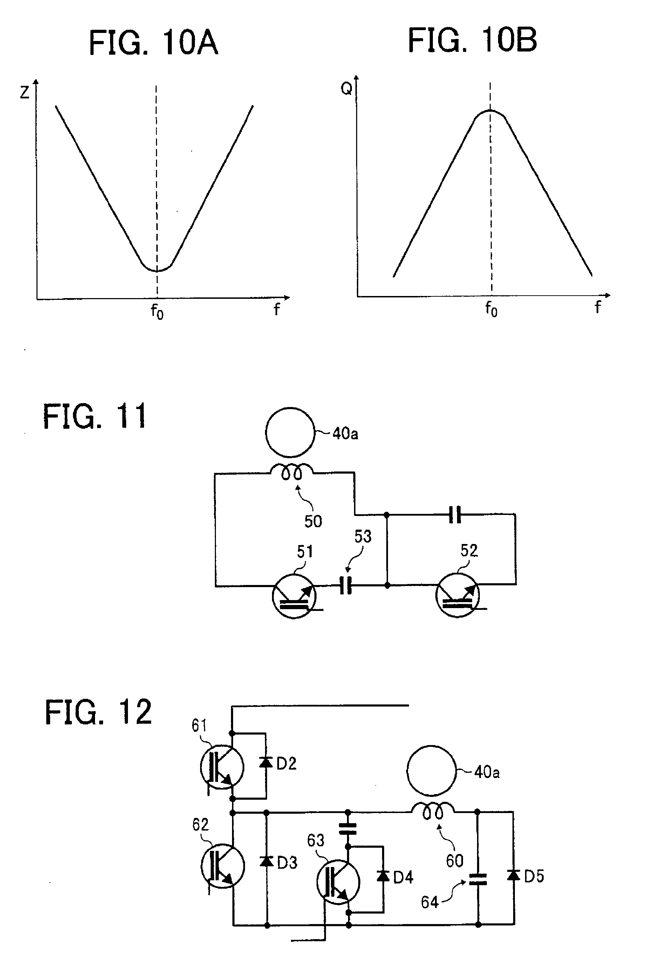

FIGs. 10A and 10B show example waveform charts of a LC resonance circuit, in which FIG. 10A shows an impedance change of a coil with respect to frequency, and FIG. 10B shows a change of quality factor with respect to frequency;
FIGs. 11, 12, and 13 show example circuitry having a heat coil, an IGBT, and a resonance capacitor for heating;

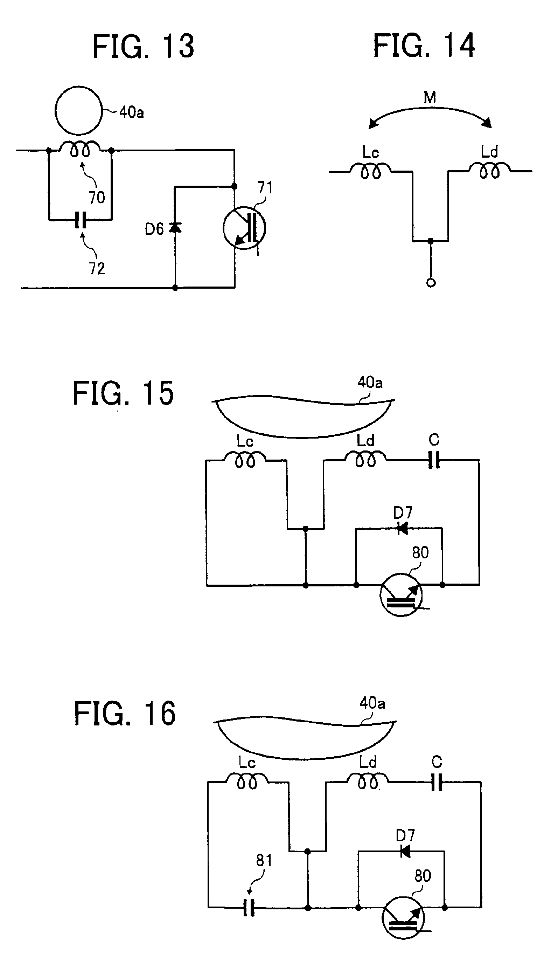

FIG. 14 shows a circuit diagram for a heating coil configured with a plurality of coils cumulatively connected each other; and
FIGs. 15 and 16 show circuit diagrams for an induction heating unit using a heating coil shown in FIG. 14.

The accompanying drawings are intended to depict example embodiments and should not be interpreted to limit the scope thereof. The accompanying drawings are not to be considered as drawn to scale unless explicitly noted.

DETAILED DESCRIPTION OF EXAMPLE EMBODIMENTS

It will be understood that if an element or layer is referred to as being "on," "against," "connected to" or "coupled to" another element or layer, then it can be directly on, against connected or coupled to the other element or layer, or intervening elements or layers may be present. In contrast, if an element is referred to as being "directly on", "directly connected to" or "directly coupled to" another element or layer, then there are no intervening elements or layers present.

Like numbers refer to like elements throughout. As used herein, the term "and/or" includes any and all combinations of one or more of the associated listed items.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, term such as "below" can encompass both an orientation of above and below. The device may be otherwise oriented (rotated 90 degrees or at other orientations) and the spatially relative descriptors used herein interpreted accordingly.

Although the terms first, second, etc. may be used herein to describe various elements, components, regions, layers and/or sections, it should be understood that these elements, components, regions, layers and/or sections should not be limited by these terms. These terms are used only to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the present invention. As used herein, the singular forms "a," "an" and "the" are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

In the following, the term "quasi-higher frequency" will be used in order to describe that the frequency of the AC current generated from the DC current (the first frequency) is higher than frequency of a AC current (second frequency) from which the DC current is generated. While the second AC current is generally of a sinusoidal waveform, the first AC current has a different shape, in particular a rectangular shape, i.e. has in addition to the sinusoidal basic wave higher harmonics. In particular, the frequency of the basic sign wave of the first AC current has a higher frequency than the basic sign wave of the second AC current.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

Referring now to the drawings, wherein like reference numerals designate identical or corresponding parts throughout the several views, a unit or method for induction-heating according to an example embodiment is described with particular references to FIG. 7 and other drawings.

Hereinafter, an image forming apparatus according to an example embodiment is explained.

FIG. 7 shows a schematic cross-sectional view of an image forming apparatus 100 according to an example embodiment. The image forming apparatus 100 may use electrophotography for forming an image on a recording medium, for example.

The image forming apparatus 100 may employ an induction-heating fixing unit having a boosting unit and a power-supply unit according to an example embodiment.

As shown in FIG. 7, the image forming apparatus 100 may include a scanning unit 11, an image forming unit 12, an automatic document feeder (ADF) 13, a document ejection tray 14, a sheet ejection tray 20, for example.

The scanning unit 11 may scan documents fed by the automatic document feeder (ADF) 13. The document ejection tray 14 may receive and stack documents fed by the ADF 13.

The sheet feed section 19 may include sheet cassettes 15 to 18. The sheet ejection tray 20 may stack recording medium (e.g., paper) ejected from the image forming unit 12.

A user may set a document D on a document receiver 21 of the ADF 13.

The user may press a print key on an operation key unit (not shown) to feed the document D in a direction shown by an arrow B1 so that the document D may be fed on a contact glass 24 of the scanning unit 11.

Specifically, a pickup roller 22 and a document transport belt 23 may rotate to feed the document D to the contact glass 24 of the scanning unit 11.

A scanner 25, provided under the contact glass 24, may scan an image of document D placed on the contact glass 24.

As shown in FIG. 7, the scanner 25 may include a light source 26, an optical device 27, and a photoelectric transducer 28, for example.

The light source 26 may irradiate the document D placed on the contact glass 24. The optical device 27 may focus a document image to the photoelectric transducer 28. For example, the photoelectric transducer 28 may include a charge coupled device (CCD), to which a document image may be focused.

After scanning an image with the scanner 25, the document D may be transported in a direction shown by an arrow B2 with a rotation of the document transport belt 23, and may be ejected to the document ejection tray 14.

As such, the document D may be fed to the contact glass 24 one by one, and the scanning unit 11 may scan a document image one by one.

The image forming unit 12 may include a photoconductor 30 as image carrier, and a writing unit 32, for example.

The photoconductor 30 may rotate in a clockwise direction, and a surface of the photoconductor 30 may be charged to a given voltage by a charging unit 31.

The writing unit 32 may irradiate a modulated light beam L, generated based on an image information scanned by the scanner 25, to a charged surface of the photoconductor 30 to form an electrostatic latent image on the surface of the photoconductor 30.

The electrostatic latent image may be developed as visible image (e.g., toner image) by a developing unit 33.

Then, the visible image may be transferred to a recording medium P from the photoconductor 30 with an effect of a transfer unit 34.

After transferring the visible image to the recording medium P, a cleaning unit 35 may clean the surface of photoconductor 30.

The image forming unit 12 may include a plurality of sheet cassettes 15 to 18 in a lower portion of the image forming unit 12. Each of the sheet cassettes 15 to 18 may contain recording medium P (e.g., paper).

The recording medium P may be fed in a direction shown by an arrow B3 from any one of the sheet cassettes 15 to 18. Then, the recording medium P may be transferred with the visible image from the photoconductor 30 as above explained.

The recording medium P may be further transported in a direction shown by an arrow B4 to a fixing unit 36, which may include a fixing roller 40 and a pressure roller 41.

The fixing roller 40 (as heating roller) and pressure roller 41 may apply heat and pressure to the recording medium P to fix the visible image on a surface of the recording medium P.

After fixing the visible image on the recording medium P, an ejection roller 37 may transport the recording medium P in a direction shown by an arrow B5 to eject and stack the recording medium P on the sheet ejection tray 20.

The fixing unit 36, configured with the fixing roller 40 and pressure roller 41, may include an IH unit (induction-heating unit) 1B, which may heat the fixing roller 40 with an induction-heating method.

The fixing roller 40 may include a metal core and surface layer coated on the metal core.

For example, the metal core may be made of magnetic metal material such as iron, cobalt, nickel, or an alloy of such metals, and may be shaped in a hollow cylinder shape.

The metal core of fixing roller 40 may be preferably made of magnetic metal material having lower heat capacity (i.e., a temperature of metal can be increased in a shorter period of time).

The surface layer of the fixing roller 40 may be made of a rubber material having a given heat resistance such as silicone rubber. Such rubber material may be solid-type or foamed-type, for example.

The pressure roller 41 may include a metal core and an elastic member coated on the metal core.

For example, the metal core may be made of a metal material having higher heat conductivity such as copper and aluminum, and may be shaped in a cylinder shape. The core metal may be preferably made of a metal including stainless steel, for example.

The elastic member may be made of material having a given heat resistance and higher toner separation ability.

The fixing roller 40 and pressure roller 41 may define a nip therebetween, at which the fixing roller 40 and pressure roller 41 may apply heat and pressure to the recording medium P having un-fixed toner image thereon.

FIG. 8 shows an example circuit diagram of the IH unit 1B shown in FIG. 7. The IH unit 1B may include a rectifying circuit 2, and an inverter circuit 3B, for example.

As shown in FIGs. 7 and 8, the IH unit 1B may be provided in the fixing unit 36 while setting a given gap between the IH unit 1B and the fixing roller 40, wherein the fixing roller 40 may be an object to be heated by the IH unit 1B.

As shown in FIG. 7, the rectifying circuit 2 may include a commercial power supply 4, a smoothing filer coil L2, a noise filer capacitor C, a capacitor C2, and a current trans CT, for example.

The smoothing filer coil L2 and capacitor C2 may configure a LC filter such as low-pass filter.

The commercial power supply 4 may supply a given value of alternating current (AC) to the rectifying circuit 2.

Such commercial alternating current (AC) may take different values depending on areas or regions. For example, an alternating current (AC) having a voltage of 100V and frequency of 50Hz/60Hz may be used in one area.

The rectifying circuit 2 may convert such alternating current (AC) to a direct current having a given value (e.g., 141 V), and supply such direct current to the inverter circuit 3B.

The current trans CT may detect an electric current (e.g., AC 100V) of the commercial power supply 4. If the current trans CT may detect an error (or abnormal) condition of electric current of the commercial power supply 4, a protection circuit may be activated.

As shown in FIG. 8, the inverter circuit 3B may include a coupling coil ML, a resonance capacitor C1, an IGBT 5, a body diode D1, an induction-heating controller (IH controller) 6, and a drive circuit 7, for example.

The coupling coil ML may be configured with an heating coil and a resonance coil, cumulatively connected each other.

The coupling coil ML and the resonance capacitor C1 may be connected in a parallel manner.

The IGBT 5 may be used as a switching device (or element), and may be provided with the body diode D1.

The IH controller 6 may include a microcomputer having a CPU (central processing unit), a ROM (read only memory), and RAM (random access memory), for example.

As shown in FIG. 8, the coupling coil ML may include a first coil La and a second coil Lb, cumulatively connected each other.

At least one of the first coil La and second coil Lb may be used for heating an object (e.g., fixing roller 40), and the first coil La and second coil Lb may be collectively used as resonance coil.

The resonance capacitor C1 may have resonance energy when the IGBT 5 conducts a switching operation, wherein the resonance energy may be computed as below.

$$(1/2) \mathrm{L} i^2 = (1/2) \mathrm{C} \mathrm{V}^2$$

in which "L" represents inductance of coil, "i" represents electric current, "C" represents capacitance of capacitor, and "V" represents voltage.

The IGBT 5 may be used as switching device (or element), which may convert a direct current to an alternating current having a quasi-high frequency wave.

The IH controller 6 may have a function of correcting a variation of inductance of the coupling coil ML.

The IH controller 6 and drive circuit 7 may have a function of controlling a value of quasi-high frequency wave of the IGBT 5 so that the coupling coil ML may be in a resonance condition.

Although not shown, the IH controller 6 may further include an oscillating circuit (or timer circuit), and a protection circuit, for example. With such circuit, the IH controller 6 may transmit a given command to the drive circuit 7 to instruct a switching timing of the IGBT 5.

The drive circuit 7 may include a totem-pole circuit, for example. The drive circuit 7 may control an ON/OFF switching of the IGBT 5 based on a given command transmitted from the IH controller 6.

The inverter circuit 3 may receive a direct current from the rectifying circuit 2, and then convert the direct current to an alternate current having a quasi-high frequency wave (e.g., 20KHz to 60KHz) by using the IGBT 5.

The IH controller 6 and drive circuit 7 may control an ON/OFF switching of the IGBT 5.

Such quasi-high frequency wave may be supplied to the coupling coil ML and resonance capacitor C1, by which a magnetic field may be generated by the coupling coil ML and a resonance may be generated by the resonance capacitor C1. With such coupling coil ML, the fixing roller 40 may be inductively heated.

A resonance circuit configuration shown in FIG. 8 having the coupling coil ML, the resonance capacitor C1, and the IGBT 5 (as switching device or element) may efficiently heat the fixing roller 40.

In the IH unit 1B, a switching operation of the IGBT 5 may be conducted with a given range of frequency, which may be a given rage from a resonance frequency "f", defined by the following formula 1.

$$f = 1/2\pi\sqrt{(LC)} \quad (\text{formula } 1)$$

With such resonance frequency "f," a resonance operation having a preferable Q factor may be conducted, by which a switching operation of the IGBT 5 may be efficiently conducted.

When the IGBT 5 is set to an ON-condition, an electric current may flow in the coupling coil ML, and when the IGBT 5 is set to an OFF-condition, a resonance voltage may be applied to the resonance capacitor C1.

When a current may flow in the coupling coil ML, a magnetic field may be generated around the coupling coil ML, and such magnetic field may induce a flow of eddy current in the fixing roller 40.

With a combined effect of eddy current and electric resistance of the fixing roller 40, a power computed by $(i^2) \times (R)$, in which "R" represents resistance and "i" represents current, may be generated, by which a joule heat energy may be generated to the fixing roller 40. Accordingly, the fixing roller 40 may be heated by the IH unit 1B.

The IH unit 1B may include the coupling coil ML as above explained.

As above explained, such coupling coil ML may include a resonance coil for voltage resonance and a heating coil for heating an object (e.g., fixing roller 40).

Accordingly, the coupling coil ML may have functions of heating and resonance, which may be different from a smoothing filer coil L2 provided in the rectifying circuit 2, in which alternate current (e.g., AC 100V) may be rectified.

An induction heating process may be conducted with a given electric power (e.g., AC 100V and 60Hz or 50Hz). However, an electric power having a higher voltage and higher frequency may be used for increasing a heating speed rate for induction heating.

For example, an input power having AC 100V and 60Hz or 50Hz may be increased to an output power having 600-1000$V_{0-p}$ and 20KHz to 40KHz by the inverter circuit 3B.

The inverter circuit 3B may include a voltage-resonant circuit (or referred as "LC resonance circuit"), configured with the coupling coil ML (having a resonance coil and a heating coil) and resonance capacitor C1.

With such voltage-resonant circuit (or LC resonance circuit), the inverter circuit 3B may generate a resonance waveform having a voltage value, which is obtained by multiplying a direct current voltage transmitted from the rectifying circuit 2 with Q factor.

The IH unit 1B according to an example embodiment may include a coil configuration, which may cumulatively connect coils, by which a boosting unit may be manufactured with reduced cost without affecting a resonance frequency and Q factor.

Because the coupling coil ML may have functions of heating and resonance, an inductance value of the coupling coil ML may not be changed in a greater degree.

A booster circuit according to an example embodiment may increase a voltage used for induction heating without changing the inductance value of coupling coil ML, and may increase amount of eddy current flow in the fixing roller 40.

Accordingly, a switching loss of the IGBT 5 may be reduced, and a peak value (or "resonance peak value") of resonance voltage may be increased.

With such configuration, a heating time required for heating an object (e.g., fixing roller 40) by the IH unit 1B may be decreased.

The IH unit 1B having the above-explained coil configuration may efficiently warm or heat an object (e.g., fixing roller 40) with a shorter time without changing a resonance frequency.

Hereinafter, a coil configuration having cumulatively connected coils for heating and resonance is explained with reference to FIG. 9.

FIG. 9 shows an example circuit diagram having a heating coil.

FIG. 9A shows an example circuit diagram having a plurality of coils, cumulatively connected, in which coils may be used for heating an object and for resonance.

FIG. 9B shows a conventional circuit diagram having a heating coil.

In general, heat energy to be generated by a coil may be determined by an induced electromotive force per one winding of coil.

As for the conventional heating coil shown in FIG. 9B, induced electromotive force "e," winding number "N," inductance "L," magnetic flux "$\varphi$," and electric current "I" may have following relationships:

$$e = -N(\Delta\varphi/\Delta t)$$

$$e = -L(\Delta I/\Delta t)$$

$$L = N(\Delta\varphi/\Delta I)$$

Accordingly, an induced electromotive force "e" may proportionally increase with respect to winding number "N" and inductance "L."

Accordingly, in such conventional heating coil, heat energy to be generated by a heating coil can be increased by increasing an induced electromotive force "e", wherein the induced electromotive force "e" can be increased by increasing a winding numbers of coil as above explained.

However, if the winding number of coil may be changed, an inductance of coil may also change.

A conventional IH unit may include a resonance circuit shown in FIG. 9B, which may include a heating coil and a capacitor. If an inductance of coil may change in such circuit, a frequency for circuit may also change according to the above-mentioned formula 1.

If a frequency for circuit may be significantly shifted from a resonance frequency, a resonance circuit may not be driven efficiently, and an efficiency of resonance circuit may be significantly reduced.

FIG. 9A shows a magnetic coupling coil according to an example embodiment, in which the magnetic coupling coil may have a mutual inductance M, and coupling coefficient k. Such magnetic coupling coil may have an induced electromotive force "e2," expressed by:

$$e2 = -M(\Delta I/\Delta t)$$

The mutual inductance M may be determined by a following formula 2, in which a inductance of first coil La and second coil Lb may correspond to a inductance L1 and L2, respectively.

$$M = k\sqrt{(L1) \times (L2)} \quad (\text{formula } 2)$$

Accordingly, the induced electromotive force "e2" for magnetic coupling coil shown in FIG. 9A may be determined without an effect of winding numbers of coil.

Therefore, the induced electromotive force "e2" for magnetic coupling coil shown in FIG. 9A may be controlled easily without affecting an efficiency of a resonance circuit.

Furthermore, such coil configuration shown in FIG. 9A may preferably boost a voltage value based on an inductance ratio of coils of La and Lb without changing an inductance value of each coil.

Accordingly, an induced electromotive force for a resonance circuit may be increased without changing an inductance value of each coil.

Furthermore, because such coil configuration shown in FIG. 9A may have a simpler configuration compared to an insulating-type trans, a resonance circuit having the coil configuration shown in FIG. 9A may be manufactured with a reduced cost.

Such IH unit 1B may heat the fixing roller 40 to a given temperature in a shorter period of time by setting a given value for Q factor, which may be selectively set by changing a condition of circuit.

For example, "Q factor" of "five to seven" may be set when a resonance circuit is driven by one electronic element.

The LC resonance circuit may be driven at a higher efficiency when the LC resonance circuit is driven with a given range from a resonance frequency $f_0$, wherein the resonance frequency $f_0$ may be expressed as $f_0 = (1/2\pi)\sqrt{LC}$.

FIG. 10 shows an example waveform chart of a LC resonance circuit. FIG. 10A shows an impedance change of heating coil with respect to frequency, and FIG. 10B shows a change of Q factor with respect to frequency.

When a LC constant for LC resonance circuit is set to a given value, a resonance frequency for LC resonance circuit can be determined with the above-mentioned formula 1. Accordingly, a drive frequency for LC resonance circuit may be determined.

Furthermore, heat energy to be generated in an object such as metal object may be determined by a magnetic flux generated around the object. Such magnetic flux may be determined by an amount of electric current flown in the object, and such electric current may be determined with a $V_{ce0-p}$ of IGBT 5 and resistance value of the object, to be heated.

Hereinafter, another heating coils are explained with reference to FIGs. 11 to 13.

FIG. 11 shows a circuitry having a heat coil 50, IGBTs 51 and 52, and a resonance capacitor 53 for heating an object (e.g., fixing roller 40a).

FIG. 12 shows another circuitry having a heat coil 60, IGBTs 61 to 63, diodes D2 to D5, and a resonance capacitor 64 for heating an object (e.g., fixing roller 40a).

FIG. 13 shows another circuitry having a heat coil 70, an IGBT 71, a resonance capacitor 72, a diode D6 for heating an object (e.g., fixing roller 40a).

In each circuit shown in FIGs. 11 to 13, if an inductance L of heating coil may set to a greater value, or if a capacitance C of capacitor may set to a smaller value, Q factor can be increased with a magnetic field generated around a metal cylinder for heating coil and an eddy current, which may flow in a direction to cancel an effect of the magnetic field.

In such configuration shown in FIG. 11 to FIG. 13, a resonance frequency $f_0$ may be changed by a magnetic field generated by an electric current flowing in the heating coil.

If a switching speed of the IGBT may exceed an upper speed limit under such condition, a power loss for switching operation may become greater.

Furthermore, an increase of Q factor may mean an increasing a sharpness of resonance waveform, which may be furthermore difficult to control. For example, if a frequency may change under a condition having a sharper resonance waveform, a boosting rate may change greatly.

Furthermore, with a restriction of space, an increase of inductance L of heating coil may be difficult.

In such configuration shown in FIGs. 11 to 13, a resonance voltage $V_{ce0-p}$ may be increased without changing Q factor by biasing a DC bias to a resonance voltage. For example, an electric double layer capacitor may be used.

However, such method may require a charge/discharge power source for capacitor in addition to a power source for an IH unit, which may not be preferable from a viewpoint of reducing manufacturing cost.

FIG. 14 shows a circuit diagram for a heating coil configured with a plurality of coils, cumulatively connected each other, in which a heat coil Lc and a smoothing filer coil Ld may be cumulatively connected each other.

FIGs. 15 and 16 show circuit diagrams for an induction heating unit using a heating coil shown in FIG. 14.

FIG. 15 shows a circuitry using the heating coil Lc and smoothing filer coil Ld shown in FIG. 14, cumulatively connected each other, and an IGBT 80.

FIG. 16 shows a circuitry using the heating coil Lc and smoothing filer coil Ld shown in FIG. 14, cumulatively connected each other, an IGBT 80, and a resonance capacitor 81.

FIGs. 15 and 16 may show circuitry, which may have following relationships.

$$L0 = Lc + Ld + 2M$$

$$n = \sqrt{(Ld)/(Lc)} \quad (\text{formula } 3)$$

$$M = \sqrt{(Lc) \times (Ld)} \quad (\text{formula } 4)$$

If an inductance of Ld is set to "1," an inductance of Lc may become "$(1/n)^2$" according to the formula 3. In such a case, a coupling coefficient M may become "1/n" according to formula 4.

Therefore, if an inductance of Ld is set to "1," a equation of "Lc + Ld + 2M = L0" may become "$(1/n)^2 + 1^2 + 2x (1/n) = (1+1/n)^2$."

Therefore, L0 may become $(1+1/n)^2$ when the inductance of Ld is set to "1." Under such condition, Lc and Ld may be expressed as below.

$$Ld = L0 \times 1/(1+1/n)^2$$

$$Lc = L0 \times 1/(1+1/n)^2 \times (1/n)^2$$

Such coil configuration may be preferably boost a voltage based on an inductance ratio of Lc:Ld without changing an inductance of coil.

For example, when an inductance of Ld is set to "1" and an inductance of Lc is set to "$(1/n)^2$" as above-explained, a voltage can be booted to a value obtained by multiplying a input voltage with a value of "n," expressed as "$n = \sqrt{(Ld)/(Lc)}$" in formula 3 (e.g., $n = \sqrt{(Ld)/(Lc)} = \sqrt{1/\{(1/n)^2\}} = n$).

The above explained booster circuit, and power-supply unit according to an example embodiment may be employed for a heating unit used for heating an object.

For example, as above explained, the above explained booster circuit, and power-supply unit according to an example embodiment may be employed for an image forming apparatus. In addition, the above explained booster circuit, and power-supply unit according to an example embodiment may be employed for a heating unit without limiting applications.

**Claims**

1. A boosting circuit (3B) for use in an induction heating unit (1B) for heating an object (40), comprising:

   a switch element (5) configured to generate a first alternate current voltage having a first frequency from a direct current voltage;
   a first coil (Lb) configured to generate a magnetic field around the first coil (Lb) with a flow of the alternate current voltage having the first frequency in the first coil (Lb), the magnetic field being used to induce an eddy current in the object (40) to heat the object inductively;
   **characterized by**
   a second coil (La) connected in series with a capacitor (C1), the combination of the second coil (La) and the capacitor (C1) being connected in parallel to the first coil (Lb).

2. The boosting circuit (3B) according to claim 1, wherein the switch element (5) includes an insulated gate bipolar transistor.

3. The boosting circuit (3B) according to claim 1, further comprising a controller (6) configured to control switching timing of the switch element (5).

4. The boosting circuit according to claim 1, further comprising a switchover element (D1) configured to switchover an operation of the switch element (5) within a given frequency range from a resonance frequency of the first coil (Lb), the second coil (La), and the capacitor (C1).

5. A power unit for use in an induction heating unit for heating an object, comprising:

   a power source to generate a direct current voltage; and
   the boosting circuit (3B) of one of claims 1 to 4 configured to receive the direct current voltage generated by the power source.

6. A power unit for use in an induction heating unit for heating an object, comprising:

   a rectifying circuit (2) configured to rectify a second alternate current voltage to the direct current voltage; and
   a boosting circuit (3B) of one of claims 1 to 4 configured to receive the direct current voltage rectified by the rectifying circuit (2).

7. The power unit of claim 5, wherein the first frequency is higher than a second frequency of the second alternate current voltage.

8. The power unit of one of claims 5 to 7, wherein the waveform of the first current voltage differs from the waveform of the second current voltage, in particular the second current voltage having a sinusoidal waveform while the first current voltage having a rectangular waveform.

9. An image forming apparatus, comprising:

   a fixing member (40) configured to fix an un-fixed image, formed of image developer, on a recording medium; and
   a power unit according to any of claims 5 to 8.

**Patentansprüche**

1. Ein Verstärkerschaltkreis (3B) zur Verwendung in einer Induktionsheizeinheit (1B) zum Heizen eines Objekts (40), aufweisend:

   ein Schaltelement (5), das dazu eingerichtet ist, aus einer Gleichspannung eine erste Wechselspannung mit einer ersten Frequenz zu erzeugen;
   eine erste Spule (Lb), die dazu eingerichtet ist, ein magnetisches Feld um die erste Spule (Lb) zu erzeugen mit einem Fluss der Wechselspannung mit der ersten Frequenz in der ersten Spule (Lb), wobei das magnetische Feld dazu verwendet wird, einen Wirbelstrom in dem Objekt (40) zu induzieren, um das Objekt induktiv zu heizen; **gekennzeichnet durch**
   eine zweite Spule (La), die mit einem Kondensator (C1) in Serie geschaltet ist, wobei die Kombination aus der zweiten Spule (La) und dem Kondensator (C1) parallel zu der ersten Spule (Lb) geschaltet ist.

2. Die Verstärkerschaltung (3B) gemäß Anspruch 1, wobei das Schaltelement (5) einen Insulated Gate Bipolar-Transistor enthält.

3. Die Verstärkerschaltung (3B) gemäß Anspruch 1, weiter aufweisend eine Steuereinheit (6), die dazu eingerichtet ist, das Schalttiming des Schaltelements (5) zu steuern.

4. Die Verstärkerschaltung (3B) gemäß Anspruch 1, weiter aufweisend ein Umschaltelement (D1), das dazu eingerichtet ist, einen Betrieb des Schaltelements (5) innerhalb eines gegebenen Frequenzbereichs umzuschalten von einer Resonanzfrequenz der ersten Spule (Lb), der zweiten Spule (La), und des Kondensators (C1).

**5.** Ein Aggregat zur Verwendung in einer Induktionsheizeinheit zum Heizen eines Objekts, aufweisend:

eine Energiequelle zur Erzeugung einer Gleichspannung; und
den Verstärkerschaltkreis (3B) nach einem der Ansprüche 1 bis 4, der dazu eingerichtet ist, die von der Energiequelle erzeugte Gleichspannung zu empfangen.

**6.** Ein Aggregat zur Verwendung in einer Induktionsheizeinheit zum Heizen eines Objekts, aufweisend:

eine Gleichrichterschaltung (2), die dazu eingerichtet ist, eine zweite Wechselspannung zu der Gleichspannung gleichzurichten; und
einen Verstärkerschaltkreis (3B) nach einem der Ansprüche 1 bis 4, der dazu eingerichtet ist, die von dem Gleichrichterschaltkreis (2) gleichgerichtete Gleichspannung zu empfangen.

**7.** Das Aggregat des Anspruchs 5, wobei die erste Frequenz höher ist als eine zweite Frequenz der zweiten Wechselspannung.

**8.** Das Aggregat nach einem der Ansprüche 5 bis 7, wobei sich die Wellenform der ersten Spannung von der Wellenform der zweiten Spannung unterscheidet, wobei insbesondere die zweite Spannung eine sinusförmige Wellenform hat, während die ersten Spannung eine rechteckförmige Wellenform hat.

**9.** Eine Bilderzeugungsvorrichtung, aufweisend:

eine Fixiereinheit (40), die dazu eingerichtet ist, ein unfixiertes Bild, gebildet aus einem Bildentwickler, auf einem Aufzeichnungsmedium zu fixieren; und
ein Aggregat gemäß einem der Ansprüche 5 bis 8.

**Revendications**

**1.** Circuit de démarrage (3B) destiné à être utilisé dans une unité de chauffage à induction (1B) servant à chauffer un objet (40), comprenant :

un élément commutateur (5) configuré pour générer une première tension alternative ayant une première fréquence à partir d'une tension continue ;
une première bobine (Lb) configurée pour générer un champ magnétique autour de la première bobine (Lb) avec un flux de la tension alternative ayant la première fréquence dans la première bobine (Lb), le champ magnétique étant utilisé pour provoquer un courant de Foucault dans l'objet (40) afin de chauffer l'objet par induction ;
**caractérisé par**
une seconde bobine (La) connectée en série à un condensateur (C1), la combinaison de la seconde bobine (La) et du condensateur (C1) étant connectée en parallèle à la première bobine (Lb).

**2.** Circuit de démarrage (3B) selon la revendication 1, dans lequel l'élément commutateur (5) comprend un transistor bipolaire à grille isolée.

**3.** Circuit de démarrage (3B) selon la revendication 1, comprenant en outre un dispositif de commande (6) configuré pour commander le moment de commutation de l'élément commutateur (5).

**4.** Circuit de démarrage selon la revendication 1, comprenant en outre un élément de basculement (D1) configuré pour basculer une opération de l'élément commutateur (5) dans une plage de fréquence donnée depuis une fréquence de résonance de la première bobine (Lb), de la seconde bobine (La) et du condensateur (C1).

**5.** Unité d'alimentation destinée à être utilisée dans une unité de chauffage à induction servant à chauffer un objet, comprenant :

une source d'alimentation pour générer une tension continue ; et
le circuit de démarrage (3B) selon l'une des revendications 1 à 4 configuré pour recevoir la tension continue générée par la source d'alimentation.

6. Unité d'alimentation destinée à être utilisée dans une unité de chauffage à induction servant à chauffer un objet, comprenant :

un circuit de redressement (2) configuré pour redresser une seconde tension alternative en tension continue ; et un circuit de démarrage (3B) selon l'une des revendications 1 à 4 configuré pour recevoir la tension continue redressée par le circuit de redressement (2).

7. Unité d'alimentation selon la revendication 5, dans laquelle la première fréquence est supérieure à une seconde fréquence de la seconde tension alternative.

8. Unité d'alimentation selon l'une des revendications 5 à 7, dans laquelle la forme d'onde de la première tension diffère de la forme d'onde de la seconde tension, en particulier la seconde tension ayant une forme d'onde sinusoïdale tandis que la première tension a une forme d'onde rectangulaire.

9. Appareil de formation d'images, comprenant :

un élément de fixage (40) configuré pour fixer une image non fixée, tirée d'un développeur d'image, sur un support d'enregistrement ; et
une unité d'alimentation selon l'une quelconque des revendications 5 à 8.

# FIG. 1

# FIG. 2

$\{V_{ce0-p}(600V_{0-p})\}$ 111

AT 20KHz

$\{15V_{0-p}\}$ 112

$\{50A_{0-p}\}$ 113

## FIG. 3A

IGBT $V_{ce0-p}$

VOLTAGE AT
GATE OF IGBT

CURRENT AT
COLLECTOR
OF IGBT

## FIG. 3B

IGBT $V_{ce0-p}$

VOLTAGE AT
GATE OF IGBT

CURRENT AT
COLLECTOR
OF IGBT

## FIG. 3C

IGBT $V_{ce0-p}$

VOLTAGE AT
GATE OF IGBT

CURRENT AT
COLLECTOR
OF IGBT

# FIG. 4

AC 60Hz/50Hz    DC 1.2KW    AC 20-30KHz    MAGNETIC FIELD 1KW

# FIG. 5

EP 1 838 138 B1

FIG. 6

18

# FIG. 7

# FIG. 8

# FIG. 9A

# FIG. 9B

# FIG. 10A

# FIG. 10B

# FIG. 11

# FIG. 12

# FIG. 13

# FIG. 14

# FIG. 15

# FIG. 16

**EP 1 838 138 B1**

## REFERENCES CITED IN THE DESCRIPTION

### Patent documents cited in the description

- JP 2006076730 A
- JP 2006257588 A
- US 20020051663 A1